## Europäisches Patentamt
## European Patent Office
## Office européen des brevets

(11) Publication number: **0 090 425**
**B1**

(12) # EUROPEAN PATENT SPECIFICATION

(45) Date of publication of patent specification: **07.10.87**

(51) Int. Cl.⁴: **C 25 B 11/08,** C 25 C 7/02, C 25 D 17/10

(21) Application number: **83103185.1**

(22) Date of filing: **30.03.83**

(54) Electrolysis electrode and production method thereof.

(30) Priority: **31.03.82 JP 51370/82**

(43) Date of publication of application: **05.10.83 Bulletin 83/40**

(45) Publication of the grant of the patent: **07.10.87 Bulletin 87/41**

(84) Designated Contracting States: **BE DE GB**

(56) References cited:
EP-A-0 027 051
EP-A-0 046 447
DE-A-1 571 721
US-A-4 052 271

PATENT ABSTRACTS OF JAPAN, unexamined applications, section C, vol.4, no.178, December 10, 1980, THE PATENT OFFICE JAPANESE GOVERNMENT, page 125C34, No. 55-119 198

The file contains technical information submitted after the application was filed and not included in this specification

(73) Proprietor: **Ishifuku Metal Industry Co., Ltd.**
**3-20-7, Uchikanda**
**Chiyodaku Tokyo-to (JP)**

(72) Inventor: **Asaki, Tomoyoshi**
**4-2-4, Honcho**
**Fujisawa-shi Kanagawa-ken (JP)**
Inventor: **Kamegaya, Yoichi**
**2-52-9, Shimo**
**Kita-ku Tokyo-to (JP)**
Inventor: **Arai, Yukio**
**1074, Shiraoka Shiraokamachi**
**Minamisaitama-gun Saitama-ken (JP)**
Inventor: **Sasaki, Yasuhumi**
**1-16-9, Mizutanihigashi**
**Fujimi-shi Saitama-ken (JP)**
Inventor: **Koyanagi, Nobuyuki**
**4-15-1, Oosawa**
**Koshigaya-shi Saitama-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

The invention relates to an electrode for electrolysis, especially an anode having a low overvoltage and high durability.

Electrodes for electrolysis have been widely used in the past. Such an electrode comprises an electrode reaction member, which is coated and bonded onto the surface of a corrosion-resistant, electrically conductive surface of a substrate. The fundamental requirements for electrodes of this kind are twofold: the electrode reaction member must have a high mechanical bonding strength to the substrate, a high chemical corrosion resistance and electric conductivity together with the substrate. The electrode reaction member itself must have a high mechanical bonding strength between the components constituting the member, a high chemical corrosion resistance, a predetermined electric conductivity and low overvoltage during the electrode reaction.

A conventional electrode reaction member comprises a component selected from the group of platinum metals which is bonded to the surface of a corrosion-resistant, electrically conductive substrate.

The electrode reaction member can be divided into two groups; one being composed of a metal selected from the platinum group, and the other being composed of an oxide of a metal selected from the platinum group. Electrodes, coated with a metal selected from the platinum group, have been known for a long time. Such electrodes have a high bonding strength of the electrode reaction member itself, a high bonding strength with respect to the substrate, an excellent corrosion resistance, and a high durability.

Although this type of electrode coated with platinum has a large number of excellent characteristics, these electrodes are not yet entirely satisfactory in respect to their applications.

The principal problems of these electrodes are as follows. The overvoltage characteristics of electrodes coated with platinum with respect to chlorine and oxygen remain low at the initial stages of the electrolysis in the same way as electrodes of other types, but at longer service time, the overvoltage characteristics become higher and they can induce an increase of the power consumption for the electrolysis and hence, an increase in the production cost. Moreover, undesired electrolytic reactions other than the intended reaction takes place with an increase in the overvoltage, and this is likely to inhibit the intended electrolysis.

Accordingly, various attempts have been made in the past to eliminate an increase in the overvoltage of electrode reaction members with longer service time. Such attempts include, for example, a method for adding various metals to the platinum by various means to form a platinum alloy, so that an increase of the over-voltage is prevented, or a method which reactivates a platinum electrode whose overvoltage has increased by cathodic electrolysis.

However, these methods are difficult in practice due to the complicated process, and the electrodes have a low corrosion resistance, or the duration of the reactivation effect is short.

On the other hand, electrodes which are coated with an oxide of a metal from the platinum group such as ruthenium oxide, rhodium oxide, palladium oxide, or iridium oxide as a component of the electrode reaction member have a low overvoltage, long life and stable catalytic function. A typical method for producing electrodes coated with an oxide of a metal selected from the platinum group is a thermal decomposition method in which a solution of a compound of said metal is deposited on the surface of the substrate, and then this compound is thermally decomposed. An electrode covered with an oxide of the platinum group can be obtained easily even if it comprises a combination of a large number of components.

However, the bonding strength between the electrode reaction member and the substrate, and the bonding strength of the electrode reaction member itself, are not sufficient if the electrode reaction member consists only of an oxide or oxides of the platinum group. Thus the electrode reaction member can peel off during electrolysis. In addition, the electrode life is extremely short.

In order to extend the life of an electrode coated with an oxide of a metal selected from the platinum group and to increase the bonding strength of the electrode reaction member, attempts have been made to add a second component such as a corrosion-resistant oxide like titanium oxide, or a metal selected from the platinum group to the oxide of the metal selected from the platinum group to form a mixture, alloy or mixed crystal.

According to JP—A—55—119198 a 1 to 7 μm thick Pt plating is applied on a base material such as Ti or Zr, and then a salt of a group VIII transition metal, such as $RuCl_3 \cdot H_2O$, IrCl or $RhCl_3$, is coated on the Pt layer and heated at about 550°C for about 1 hour to form an alloy layer consisting of a metal of the base material and Pt, a Pt layer, and an oxide layer, such as RuO, IrO or RhO on the surface of the base material. By this procedure a continuous film of an oxide of Ru, Ir or Rh is formed on the Pt layer. The insoluble anode thus obtained can sufficiently withstand not only hydrochloric acid bath but also sulfuric acid bath, and also the amount of Pt used is less. The life of the anode can be lengthened by improving the defects on the surface by smoothening the Pt layer not only by plating merely but also by heating.

Object of the present invention is to provide an electrode for electrolysis, which has a low overvoltage and a long service life, and which can be advantageously used in various electrolytic applications in the field of the electrochemical industry.

The electrode for electrolysis according to the invention comprises a titanium substrate, a porous platinum layer deposited on the outer surface of said substrate, said porous platinum layer having an apparent density of 8 to 19 $g/cm^3$, and at least one oxide of metal being selected from ruthenium, palladium and iridium being held three-dimensionally deposited within the pores and on the outer surface of the porous platinum layer.

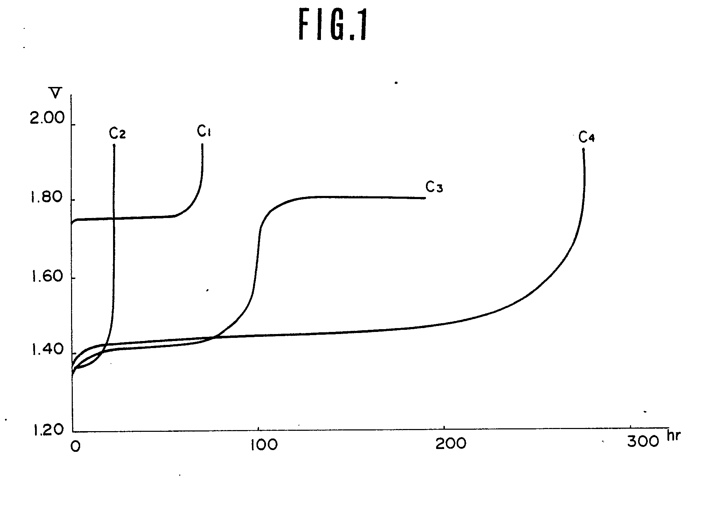

Figure 1, 2 and 3 are graphs showing the results of the measurement of the electrode potential of electrodes according to the invention.

Since the platinum layer is porous, the construction of the platinum layer and the oxides includes also such a construction in which part of the oxides is bonded to the substrate.

The electrode in accordance with the present invention can be used in a large number of electrolytic processes by varying the oxide component.

For electrolysis in an electrolytic solution which is acidic by sulfuric acid, for the electrolysis of brine used for production of sodium hypochlorite and for electrolysis in a solution having a low concentration of chlorine ions, the preferred oxide is iridium oxide.

For the electrolysis of common salt containing a high concentration of chlorine ions, the preferred oxide component is ruthenium oxide, palladium oxide or a combination thereof.

In an electrode having an electrode reaction member consisting of platinum and at least one of ruthenium oxide, palladium oxide and iridium oxide, the mode of deterioration of the electrode at the end of its life can be broadly classified into the following two groups, which have been experimentally confirmed, because the composition of the electrode reaction member is divided into independent constituents, i.e., the platinum component and the oxide component, unlike conventional multi-component electrolysis electrodes relying upon alloys, mixtures or mixed crystals, and because the oxide component is held three-dimensionally deposited within the pores and on the outer surface of the porous platinum layer.

One of the modes of deterioration of electrodes is such that the end of the life is reached at a high overvoltage in the same way as in the expiration of a platinum electrode during electrolysis while some of the electrode reaction member component remains, while the other is such that almost all of the electrode reaction member is consumed. When producing an electrode having an improved life, therefore, a suitable method can be selected while taking the modes of deterioration into consideration.

In an electrode which has expired due to a high overvoltage while sufficient electrode reaction member component remains, it is believed that the oxide appearing on the surface of the electrode reaction surface is consumed more rapidly than the platinum layer, and hence the overvoltage becomes high and the life of the electrode is over.

Accordingly, the life of the electrode in such a case can not be extended by increasing the total quantity of the electrode reaction member component.

For the reason noted above, the life of the electrolytic electrode in accordance with the present invention can be extended by increasing only the amount of the oxide component of the components of the electrode reaction member.

In an electrode whose electrode reaction member is consumed, on the other hand, the life of the electrode can be extended by increasing the amount of electrode reaction member in the same way as in the conventional method, but in most cases, the life can be extended effectively by increasing only the quantity of platinum component without increasing the total quantity of the electrode reaction member.

It is believed that the effect described above is provided when the speed of consumption of the supported material is higher than that of the support.

The method for producing the electrode of the present invention will now be described. The gist of the present method resides in that the process for producing the electrode reaction member is divided broadly into a step for producing a porous platinum layer and a step for depositing at least one oxide of metal selected from ruthenium, palladium and iridium. In other words, after the porous platinum layer is first formed and bonded to the surface of a corrosion-resistant, electrically conductive substrate, an oxide is deposited within the pores and on the outer surface of the porous platinum layer. Another porous platinum layer can be formed and bonded to the surface of the electrode reaction member. If necessary, an oxide of said metal is further deposited within the pores and on the outer surface of the porous platinum layer. These procedures are repeated at least once in order to increase the thickness of the reaction member layer.

The porous platinum layer can be formed and bonded by electroplating to the surface of the corrosion-resistant, electrically conductive substrate or to the surface of the electrode reaction member. Then a solution containing at least one metal compound, which is converted to ruthenium oxide, palladium oxide and/or iridium oxide by thermal decomposition is sufficiently penetrated into said porous platinum layer.

Subsequently the metal compound is thermally decomposed in an oxidizing atmosphere so that an oxide of ruthenium, palladium and/or iridium is formed.

Two methods may be employed, in principle, in order to form the porous platinum layer, one being a method in which the porous platinum is formed directly onto the surface of the substrate, and the other being a method in which a coating layer of the platinum is first formed, and then the coating layer is subjected to a treatment which renders it porous. However, the second method sometimes fails to accomplish the condition that the solution of the compound has to penetrate sufficiently into the porous platinum, so that the oxide is held three-dimensionally deposited within the pores, even if the method can cover the surface of the platinum metal completely.

# 0 090 425

Therefore, it is preferable to employ the first method in which the porous platinum layer is formed directly. This kind of method includes electroplating, flame spraying, thermal decomposition, and the like. Among them, electroplating is excellent with respect to the performance of the resultant electrode and economy. Among the electroplating processes in general, the most preferred method is a method in which the platinum is electrodeposited in the form of a porous spherical aggregate.

In order to obtain platinum having a higher porosity, it is effective to form the porous platinum layer directly and then increase the porosity by a chemical or electrochemical process.

The platinum metal must have a porosity sufficient to allow the solution containing the compound of ruthenium, palladium and/or iridium to penetrate into the pores. Further the bonding between the substrate and the platinum layer must be strong enough, so that the bonding will not be deteriorated due to oxidizing gases and volatile components of the compound during the heating process of the thermal decomposition.

In order to have a sufficient permeability for the solution containing said compound, the apparent density of the porous platinum is below $19$ $g/cm^3$. If the porosity is so high that the apparent density drops below $8$ $g/cm^3$, however, the mechanical strength would decrease and hence, the service life of the electrode would be reduced.

In order to allow the smooth permeation of the compound of ruthenium, palladium and/or iridium and its solution into the porous platinum layer, it is preferable that the viscosity of the solution is low and the concentration of the compound is not too high.

In order to improve the permeation of the compound, it is also effective to apply ultrasonic waves to the substrate.

Examples of the present invention will be described below with reference to the accompanying graphs.

## Example 1

A sheet of titanium was degreased using a trichlene degreasing solution and was subjected to a surface treatment using an aqueous hydrofluoric acid solution and concentrated hydrochloric acid to provide a substrate. Porous platinum having an apparent density of approximately $16$ $g/cm^3$ was deposited onto the surface of the treated titanium substrate at an electrodeposition quantity of $4.5$ $mg/cm^2$ by electroplating using a platinum plating bath prepared by dissolving dinitrodiaminoplatinum in an aqueous solution of sulfuric acid.

Next, a permeation solution was prepared by dissolving $1.07$ g of iridium chloride in $10$ ml of butanol. The permeation solution was taken up by a micropippet and was then permeated into the platinum so that the quantity of iridium oxide was $0.14$ $mg/cm^2$, calculated by the weight of the iridium. After the iridium chloride was vacuum-dried at room temperature for one hour, it was heated at $500°C$ for $20$ minutes in an atmosphere to convert it into the oxide.

For comparison, electrode No. 1-1 was produced by forming $4.5$ $mg/cm^2$ of platinum on a titanium substrate in the same way as that of the electrode of this example.

An iridium chloride solution having a concentration three times of that of the permeation solution used for the production of the electrode of the present invention was deposited on each of a titanium substrate pre-treated in the same way as the above, and on a rolled bulk platinum sheet decreased by the trichlene decreasing solution, so that the quantity of iridium was $0.14$ $mg/cm^2$, calculated by the weight of the iridium. The coated substrate and platinum sheet were then dried and heated in the same way as in the electrode of the present invention so as to produce an electrode No. 1-2 in which the iridium oxide was deposited on the titanium surface, and an electrode No. 1-3 in which the iridium oxide was deposited on the surface of the bulk platinum sheet.

These electrodes were used for electrolysis in an aqueous solution of sulfuric acid of $1$ M/l with a liquid temperature of $55°C$ and a current density of $400$ $A/dm^2$. The potential of each electrode at a current density of $1$ $A/dm^2$ was measured at predetermined periods.

The results are shown in the graph of Figure 1, in which time (hr) is plotted on the abscissa, and the electrode potential (V) with respect to silver chloride on the ordinate. The curves $C_1$, $C_2$, $C_3$ and $C_4$ correspond to the electrodes Nos. 1-1, 1-2, 1-3 and the electrode of example 1, respectively.

It can be seen from Figure 1 that the electrode of this example of the present invention maintains a lower electrode potential (lower overvoltage) and has a much longer electrode life than electrode No. 1-1. It can also be seen that the electrode of this example maintains its low electrode potential in the same way as electrodes No. 1-2 and No. 1-3.

Furthermore, it can be seen that the electrode of the present invention keeps its low electrode potential under electrolytic conditions until the electrode reaction member is almost completely consumed.

## Example 2

A sheet of titanium for a substrate was degreased and then the surface of said substrate was treated using an aqueous solution of hydrofluoric acid and an aqueous solution of sulfuric acid. Thereafter, platinum was deposited on the surface of the titanium sheet at an electrodeposition quantity of $1.1$ $mg/cm^2$ in the same way as in Example 1, so that a porous platinum layer having an average apparent density of $16$ $g/cm^3$ was obtained.

Next, $0.01$ $mg/cm^2$ of ruthenium oxide, calculated by the weight of the ruthenium, was deposited on

4

the platinum formed in the manner described above, using a permeation solution prepared by dissolving 0.258 g of ruthenium chloride in 10 ml of butanol in the same way as in Example 1.

However, the heating temperature during the thermal decomposition was 430°C.

After 0.5 mg/cm² of platinum was electrodeposited on the surface of the electrode reaction member prepared in the manner described above, 0.01 mg/cm² of ruthenium oxide, calculated by the weight of the ruthenium, was deposited thereon in the same way as above to provide an electrode.

For comparison, electrode No. 2-1 was produced by depositing platinum on a titanium sheet in the same way as above. Electrode No. 2-2 was produced by depositing the same permeation solution as used above on the surface of a pre-treated titanium sheet, and electrode No. 2-3 was likewise produced by depositing the permeation solution on the surface of a bulk platinum sheet. In these electrodes Nos. 2-2 and 2-3, the same quantity of ruthenium oxide was deposited on each substrate as in the electrode of example 2.

These electrodes were used for electrolysis in an aqueous solution of 200 g/l sodium chloride at a liquid temperature of 45°C and a current density of 100 A/dm², and the electrode potential at a current density of 10 A/dm² was measured at predetermined periods.

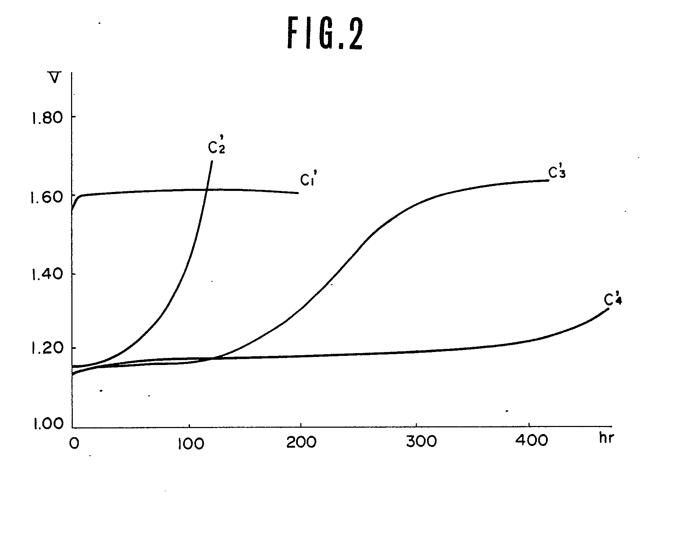

The results are shown in the graph of Figure 2 in the same way as in Figure 1. The electrodes Nos. 2-1, 2-2, 2-3 and the electrode of example 2 are represented by the symbols $C_1'$, $C_2'$, $C_3'$ and $C_4'$, respectively.

It can be seen from Figure 2 that the electrode of the present invention, which comprises a combination of platinum and ruthenium oxide, maintains a lower electrode potential for a longer period of time, and has a higher durability than the other electrodes.

Example 3

After a sheet of titanium substrate was surface-treated in the same way as in Example 2, porous platinum was deposited on the titanium sheet by electroplating using a platinum bath prepared by dissolving dinitrodiaminoplatinum in an aqueous alkali solution. The platinum thus formed was then treated with an aqueous acidic solution consisting of hydrochloric acid and nitric acid. The platinum was depositied at an electrodeposition quantity of 2.3 mg/cm² and has an apparent density of approximately 14 g/cm³.

Next, 0.10 mg/cm² of palladium oxide, calculated by the weight of the palladium, was deposited thereon using a permeation solution prepared by dissolving 0.832 g of palladium chloride in 10 ml of an aqueous hydrochloric acid solution, in the same way as in Example 1, to provide the electrode of example 3.

The heating temperature in this case was 600°C.

For comparison, electrode No. 3-1 was produced by depositing platinum on a titanium sheet in the same way as in this example. By using a coating solution having a concentration twice that of the permeation solution of this example, 1.0 mg/cm² of palladium oxide, calculated by the weight of the palladium, was depositied on a titanium sheet under the same heating conditions as above to provide electrode No. 3-2. Further the same quantity of palladium oxide was deposited on a bulk platinum sheet under the same heating conditions as above to provide electrode No. 3-3.

These electrodes were then subjected to an electrolytic test in the same way as in Example 2.

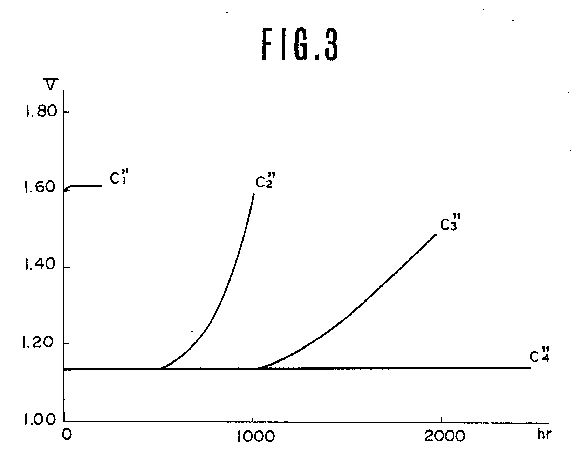

The results are shown in Figure 3 in the same way as in Figures 1 and 2. Electrodes Nos. 3-1, 3-2, 3-3 and the electrode of example 3 are represented by $C_1''$, $C_2''$, $C_3''$, and $C_4''$, respectively.

It can be seen from Figure 3 that the electrode of example 3, which comprises a combination of platinum and palladium oxide maintains a lower electrode potential for a longer period of time, and has a higher durability than the other electrodes.

Example 4

Platinum was deposited on a titanium sheet as the substrate in the same way as in Example 1 out an electrodeposition quantity of 1.7 mg/cm², so that the porous platinum has an apparent density of 16 g/cm³. Three electrodes (Nos. 1, 2, 3) were then produced by using a permeation solution prepared by suitably diluting the permeation solution of Example 1 by butanol and by changing the quantity of iridium oxide used.

These electrodes were used for electrolysis in an aqueous solution of 1 M/l sulfuric acid at a liquid temperature of 55°C and a current density of 10 A/dm². The electrode life until the electrode potential with respect to silver chloride reached 1.7 V was measured, with the results as shown in the following Table 1.

TABLE 1

| Sample No. | Components of electrode reaction member | | Electrode life | Remarks |
| | Platinum | Iridium oxide[*] | | |
| --- | --- | --- | --- | --- |
| 1 | 1.7 mg/cm² | 0.01 mg/cm² | 1.5 hr. | Most of the electrode reaction member component remained at the end of the electrode life. |
| 2 | 1.7 mg/cm² | 0.02 mg/cm² | 10 | |
| 3 | 1.7 mg/cm² | 0.04 mg/cm² | at least 50 | |

[*]calculated by the weight of the iridium

It can be seen from Table 1 that the life of the electrode of this invention can be extended effectively by increasing the quantity of iridium oxide under these electrolytic conditions.

Example 5

Three electrolysis electrodes were produced in the same way as in Example 1, but the quantity of platinum deposited on the titanium sheet as the substrate was varied.

These electrodes Nos. 1', 2' and 3' were subjected to an electrolytic test in the same way as in Example 1, and the life of the electrodes until the electrode potential with respect to silver chloride reached 1.7 V was measured with the results as shown in the following Table 2.

TABLE 2

| Sample No. | Components of electrode reaction member | | Electrode life | Remarks |
| | Platinum | Iridium oxide[*] | | |
| --- | --- | --- | --- | --- |
| 1' | 1.7 mg/cm² | 0.14 mg/cm² | 130 hrs. | The components of the electrode reaction member were almost completely consumed at the end of the life. |
| 2' | 3.0 mg/cm² | 0.14 mg/cm² | 180 hrs. | |
| 3' | 4.5 mg/cm² | 0.14 mg/cm² | 265 hrs. | |

[*]calculated by the weight of iridium

Example 6

An electrode III was produced as the electrode of this example using iridium oxide in the same way as in Example 1, while electrodes I and II were produced as comparison electrodes using platinum and iridium oxide as the coating components, respectively, in the same way as in Example 1.

These electrodes were used for electrolysis in a 3% aqueous solution of sodium chloride at a liquid temperature of 20°C and a current density of 10 A/dm², and the effective chlorine-generation efficiency was measured. The results are shown in Table 3.

It can be seen from Table 3 that the electrode III of example 6 which comprises the combination of platinum, and iridium oxide, exhibits a higher effective chlorine-generation efficiency than the electrode I and II.

TABLE 3
Comparison Examples

| | Composition of electrode reaction member | Effective chlorine-generation efficiency (%) |
| Sample No. | Coating component | |
| --- | --- | --- |
| I | platinum | 65 |
| II | A | 80 |

# 0 090 425

## Example 6

| | Composition of electrode reaction member | | Effective chlorine-generation efficiency (%) |
|---|---|---|---|
| Sample No. | Oxide | Porous layer | |
| III | A | platinum metal | 85 |
| IV | A-10 mol%B | platinum metal | 90 |
| V | A-15 Mol%C | platinum metal | 95 |
| VI | A-15 mol%B-15 mol%C | platinum metal | 95 |

[N.B.]

$$*\text{Effective chlorine generation efficiency} = \frac{\text{Measured quantity of chlorine generated (g)}}{\text{Theoretical quantity of chlorine generation (g)}} \times 100$$

*A: Iridium oxide
B: Ruthenium oxide
C: Palladium oxide

Example 7

Platinum was deposited on a titanium sheet in the same way as in Example 1, and ruthenium oxide, palladium oxide and iridium oxide were combined in various combinations to produce electrodes according to the present invention on which composite components of the above oxides were deposited.

The electrode potentials of these electrodes was then measured in an aqueous solution of sulfuric acid or in an aqueous solution of sodium chloride. The effective chlorine-generation efficiency was measured for electrodes IV, V and VI in the same measuring conditions as in Example 6.

The results of the experiments are as follows. An electrode according to the present invention having a composite component being deposited thereon prepared by adding up to 50 mol% of palladium oxide and/or iridium oxide to ruthenium oxide exhibited an electrode potential lower than, or equal to, the electrode potential of an electrode of the present invention having ruthenium oxide alone deposited thereon, in an aqueous sodium chloride solution. The electrode potential of an electrode of the present invention having a composite component being deposited thereon prepared by adding up to 50 mol% of ruthenium oxide and/or iridium oxide to palladium oxide was extremely low in the same way as that of an electrode according to the present invention having palladium oxide alone being deposited thereon, in an aqueous sodium chloride solution. Further, the electrode potential of an electrode according to the present invention having a composite component being deposited thereon prepared by adding up to 50 mol% of ruthenium oxide and/or palladium oxide to iridium oxide was lower than that of an electrode according to the present invention having iridium oxide alone being deposited thereon in an aqueous solution of sulfuric acid.

The results of the measurement of the effective chlorine-generation efficiency are also shown in Table 3. It can be seen from Table 3 that the effective chlorine-generation efficiency can be improved by adding ruthenium oxide and/or palladium oxide to iridium oxide when preparing the support.

It can be seen from Table 2 that the life of the electrode according to the present invention can be extended effectively by increasing the amount of platinum under these electrolytic conditions.

As described above, the electrode for electrolysis according to the invention has a fundamentally higher mechanical bonding strength with respect to the substrate, prevents the peeling of the electrode reaction member, and has a high chemical corrosion resistance.

In particular, because at least one compound selected from ruthenium oxide, palladium oxide and iridium oxide is permeated into the porous platinum and is held three-dimensionally deposited within the pores and on the outer surface of the platinum layer, peeling can be effectively prevented.

The present invention provides another advantages in that the mechanical bonding strength is high between the electrode reaction components, the chemical resistance is high, and these properties are always linked to each other.

The increase of the overvoltage which takes place in a platinum electrode with longer service time during electrolysis can be almost completely prevented until the components of the electrode reaction member are substantially consumed. The time before the increase of the overvoltage at the platinum electrode reaches its limit can be markedly retarded.

In accordance with the present invention, it is also possible to prevent the deterioration of the electrode by increasing only the amount of the porous platinum under the conditions in which the electrode reaction members are consumed, until the end of the life of the electrode. This eliminates the necessity of increasing

7

**0 090 425**

the total quantity of the electrode reaction member components, as a whole, and saves the necessary resources.

The amount of the oxides of ruthenium, palladium and/or iridium consumed is much smaller than the consumption of an electrode which uses an oxide of said platinum elements alone as coating material and the consumption of these oxides can be reduced according to the present invention.

### Claims

1. An electrode for electrolysis, comprising:
a titanium substrate,
a porous platinum layer deposited on the outer surface of said substrate, said porous layer having an apparent density of 8 to 19 g/cm$^3$,
and at least one oxide of metal being selected from ruthenium, palladium and iridium being held three-dimensionally deposited within the porous and on the outer surface of the porous platinum layer.

2. The electrode according to Claim 1 wherein said porous platinum layer is deposited on said substrate by electroplating using platinum plating bath.

3. The electrode according to Claim 1 in which said platinum layer has a porosity sufficient to permit a solution of a compound of said metal in a solvent therefore to permeate into said porous platinum layer.

4. The electrode according to Claim 3 which has been prepared by forming said porous platinum layer on said substrate, then permeating a solution of a compound of said metal dissolved in a solvent into the pores of said porous platinum layer, and thermally decomposing said compound in an oxidizing atmosphere to convert same to said oxide of said metal.

5. The electrode according to Claim 4 which comprises a further porous platinum layer applied on the first mentioned porous platinum layer, said further porous platinum layer having been prepared by repeating steps of forming the porous platinum layer, permeating said solution and thermally decomposing said compound.

6. The electrode according to Claim 1 in which the amount of platinum per unit area of said substrate, expressed as mg/cm$^2$, is greater than the amount of said oxide per unit area of said substrate, expressed as mg/cm$^2$.

### Patentansprüche

1. Elektrode für die Elektrolyse mit
einem Schichtträger aus Titan,
einer porösen Schicht aus Platin, die auf der äußeren Oberfläche des erwähnten Schichtträgers abgeschieden ist, wobei die erwähnte poröse Schicht eine scheinbare Dichte von 8 bis 19 g/cm$^3$ hat,
und mindestens einem dreidimensional innerhalb der Poren und auf der äußeren Oberfläche der porösen Schicht aus Platin abgeschieden gehaltenen Oxid eines aus Ruthenium, Palladium und Iridium ausgewählten Metals.

2. Elektrode nach Anspruch 1, bei der die erwähnte poröse Schicht aus Platin durch Elektroplattieren unter Verwendung eines Platinierbandes auf dem erwähnten Schichtträger abgeschieden wird.

3. Elektrode nach Anspruch 1, bei der die erwähnte Schicht aus Platin eine ausreichende Porosität hat, um zu erlauben, daß eine Lösung einer Verbindung des erwähnten Metals in einem Lösungsmittel dafür in die erwähnte Schicht aus porösem Platin eindringt.

4. Elektrode nach Anspruch 3, die dadurch hergestellt worden ist, daß auf dem erwähnten Schichtträger die erwähnte poröse Schicht aus Platin gebildet wurde, daß dann eine Lösung einer in einem Lösungsmittel gelösten Verbindung des erwähnten Metalls in die Poren der erwähnten Schicht aus porösem Platin eindringen gelassen wurde und daß die erwähnte Verbindung zu ihrer Umwandlung in das erwähnte Oxid des erwähnten Metalls in einer oxidierenden Atmosphäre thermisch gespalten wurde.

5. Elektrode nach Anspruch 4 mit einer weiteren porösen Schicht aus Platin, die auf die zuerst erwähnte poröse Schicht aus Platin aufgebracht ist, wobei die erwähnte weitere poröse Schicht aus Platin durch Wiederholung der Schritte der Bildung der porösen Schicht aus Platin, des Eindringenlassens der erwähnten Lösung und der thermischen Spaltung der erwähnten Verbindung hergestellt worden ist.

6. Elektrode nach Anspruch 1, bei der die als mg/cm$^2$ ausgedrückte Menge des Platins je Flächeneinheit des erwähnten Schichtträgers größer ist als die als mg/cm$^2$ ausgedrückte Menge des erwähnten Oxids je Flächeneinheit des erwähnten Schichtträgers.

### Revendications

1. Une électrode pour électrolyse comportant:
un substrat en titane,
une couche poreuse de platine déposée sur la surface externe dudit substrat, ladite couche poreuse ayant une masse volumique apparente de 8 à 19 g/cm$^3$,
et au moins un oxyde d'un métal, sélectionné parmi le ruthenium, le palladium et l'iridium, retenu après dépôt tridimensionnel dans les pores et sur la surface externe de la couche poreuse de platine.

8

2. L'électrode selon la revendication 1 dans laquelle ladite couche poreuse de platine est déposée sur ledit substrat par placage électrolytique en utilisant un bain de platine de placage.

3. L'électrode selon la revendication 1 dans laquelle ladite couche de platine a une porosité suffisante pour permettre à une solution d'un composé dudit métal dans un solvant approprié de pénétrer dans ladite couche poreuse de platine.

4. L'électrode selon la revendication 3 préparée en formant ladite couche poreuse de platine sur ledit substrat, en faisant alors pénétrer une solution d'un composé dudit métal dissout dans un solvant dans les pores de ladite couche poreuse de platine et en décomposant thermiquement ledit composé dans une atmosphère oxydante pour le convertir en un oxyde dudit métal.

5. L'électrode selon la revendication 4 qui comporte une autre couche poreuse de platine appliquée sur la première couche poreuse platine mentionnée, ladite autre couche poreuse de platine ayant été préparée en répétant les étapes de formation de la couche de platine, en y faisant pénétrer ladite solution et en décomposant thermiquement ledit composé.

6. L'électrode selon la revendication 1 dans laquelle la quantité de platine par unité de surface dudit substrat, exprimée en mg/cm², est supérieure à la quantité dudit oxyde par unité de surface dudit substrat, exprimée en mg/cm².

# FIG.1

# FIG.2

# FIG.3